Europäisches Patentamt

(19) European Patent Office

Office européen des brevets

(11) Publication number: **0 026 973**
B1

(12) **EUROPEAN PATENT SPECIFICATION**

(45) Date of publication of patent specification: **15.02.84**

(51) Int. Cl.³: **B 29 C 25/00, B 29 C 5/12**

(21) Application number: **80302962.8**

(22) Date of filing: **27.08.80**

(54) Method of making heat recoverable articles.

(30) Priority: **28.08.79 GB 7929755**

(43) Date of publication of application:
**15.04.81 Bulletin 81/15**

(45) Publication of the grant of the patent:
**15.02.84 Bulletin 84/7**

(84) Designated Contracting States:
**AT BE CH DE FR GB IT LI LU NL SE**

(56) References cited:
**DE - A - 1 914 455**
**DE - A - 1 948 248**
**DE - A - 2 114 934**
**DE - A - 2 228 017**
**DE - A - 2 448 414**
**DE - A - 2 748 383**
**DE - A - 2 802 798**
**GB - A - 1 483 350**
**US - A - 2 410 936**

(73) Proprietor: **BICC Public Limited Company**
**21, Bloomsbury Street**
**London, WC1B 3QN (GB)**

(72) Inventor: **Margolis, David Saul**
**81 Prebend Gardens**
**London W6 (GB)**

(74) Representative: **Poole, Michael John et al,**
**BICC plc Patents Department 38 Wood Lane**
**London, W12 7DX (GB)**

Courier Press, Leamington Spa, England.

**0 026 973**

Method of making heat recoverable articles

This invention relates to methods of making heat recoverable articles.

Heat recoverable articles, other than plain tubing, are normally made by injection-moulding, which entails heavy tooling cost and is therefore uneconomic unless large numbers of identical articles are required.

US Patent 34481182 proposes a process for making heat shrinkable end caps by welding at intervals the inner layer of a two layer tube, the outer layer being crosslinked by irradiation or chemically; one of the materials proposed for the outer layer is PVC.

British Patent 1483350 proposes a technique for making heat shrinkable products by dipping a former into a PVC plastisol to form a coating thereon and, after the plastisol constituting the coating has gelled, removing the coating from the former to form a hollow article and expanding it using a cool or heated PTFE rod or other mandrel. There is no suggestion in this document that the PVC should be crosslinked, and the process is energetically inefficient because of the changes required in the temperature of the mandrel.

In accordance with the present invention, a method of making a heat recoverable hollow article comprises the steps of adding a radiation-crosslinking promoter to a plastisol, dipping a former into the PVC plastisol to form a coating thereon and, after the plastisol constituting the coating has gelled, removing the coating from the former to form a hollow article, irradiating the hollow article to crosslink it, heating the hollow article to at least 150°C and deforming it by expanding pneumatically into a cold mould to make it heat recoverable.

If required, the former is dipped more than once into the plastisol to form a hollow article of increased wall-thickness and to reduce the risk of perforations or thin areas.

The method of the present invention is economical, particularly when a wide range of designs is desired as the method does not require the expensive tooling of injection-moulding. The method of the invention is suited to making hollow articles of simple shape and uniform wall-thickness, and in particular articles with a cross-section which varies, uniformly or not, along the length of the article and/or with one closed end.

Among specific articles that can usefully be made by the method of the invention are splice caps and breeches pieces for electric conductor joints; hand grips for tools, hand levers etc; protective caps and the like for covering the ends of the shafts, oil tubes and the like on machinery in transit; ferrules for the ends of furniture legs, walking-sticks, ladders etc; and protective gaiters for telescopic or articulated mechanical joints.

Advantageously, the composition and viscosity of the plastisol are monitored carefully to ensure that they remain within closely defined limits; the viscosity of the plastisol and the rate of dipping may be varied dependent upon the wall-thickness required.

Preferably the plastisol coating is heated to effect gelling; the coating may then be cooled and stripped from the formers, for example by rolling off.

As an alternative to irradiation, thermal crosslinking can be utilised in which case a suitable initiator such as an azo compound or a peroxide will normally be included in the plastisol in addition to the crosslinking promoter. Gelling and crosslinking of the plastisol may be done in a single continuous heating operation.

Preferably the articles, when crosslinked, are heated to at least 150°C before being deformed under control into a cold mould, by pneumatically inflating with air (suitably in most cases at about $3 \times 10^4 Nm^{-2}$) by hydraulically inflating or by using a mechanical expansion device, e.g. a three-fingered expanding mandrel or for simple tubular shapes a tapered mandrel. Expansion ratios at least approaching 100% may be achieved using appropriately formulated crosslinked compositions.

Preferably, as many conventional PVC plastisols incorporate plasticisers that have vapours that are flammable at recovery temperatures, a flame-retardant is included to inhibit ignition of the article when it is exposed to an open flame, for instance in the recovery operation. Subject to other requirements, the use of plasticisers with high molecular weights, and consequently low volatilities, reduces this risk. Some of the plasticiser used in the plastisol may be replaced with non-flammable chlorinated hydrocarbon extender compatible with the plastisol.

Examples

1. Three plastisol formulations were made up as follows: The first formulation was prepared by mixing 100 parts of an emulsion grade PVC polymer, type P72/850 in the "Corvic" (trademark) range of PVC polymers manufactured by ICI, with 61 parts di-2-ethyl hexyl phthalate and 48 parts diethyl hexyl sebacate plasticisers. 12 parts lead phthalate powder was added as stabiliser, (this being a greater amount than in the standard formulation), together with 14 parts trimethylol propane trimethacrylate, a crosslinking promoter, the mixing being done with mechanical stirring under vacuum until the dispersion was uniform (about 3 hours). The resultant plastisol was left to stand under vacuum without stirring for 30 minutes.

2. In the second formulation the amount of trimethylol trimethacrylate was decreased to 7 parts and the amount of di-2-thyl hexyl phthalate was correspondingly increased to 68 parts, the amounts of

2

the remaining constituents being kept the same as before. The mixing operation was the same as before.

3. In the third formulation, which is at present considered the most satisfactory, the ingredients were as follows:

|  | Parts by Weight |
|---|---|
| PVC paste polymer (Corvic P72/850) | 100 |
| $C_7$—$C_9$ trimellitate plasticiser (Monoplas 530) | 68 |
| Dioctyl adipate plasticiser | 14 |
| Trimethylolpropane trimethacrylate (Sartomer Sr-350) | 10 |
| Dibasic lead phthalate stabiliser | 12 |
| Antimony trioxide | 6 |

and the mixing procedure as before.

Tubular formers with diameters ranging from 13 to 38 mm and with rounded bottoms were suspended in an oven at 168°C for ten minutes and then were dipped into and removed from a supply of one of the plastisols, each such dipping operation taking two minutes. The coated formers were then suspended in the oven at 168°C for 30 minutes to gel the plastisol coating. The coatings were stripped from the former by unrolling and the resultant end caps were up to 80 mm in length and had walls of up to 2 mm thick.

The caps were then crosslinked by electron irradiation at doses of 2.5, 5.0 and 7.5 Mrad. The caps were heated to 150°C and then air pressure of about $3.3 \times 10^4 Nm^{-2}$ was applied so that they were inflated into a tubular mould which was kept cold to make the caps shrink from the mould enough to ensure they did not adhere to the mould; air pressures of $1.3 \times 10^4$ to $2.0 \times 10^4$ $Nm^{-2}$ were found adequate for the larger caps. Expansion of up to 50% could readily be obtained from the first and second formulations: the third formulation could be expanded up to nearly 100%.

The expansion caps could be shrunk onto test mandrels by heating the caps to about 200°C, full recovery being effected after about 70 seconds. On expansion, the material was robust and a cap could be re-expanded and used a second time and recovery occurred.

The general properties of the product derived from the third formulation after irradiation at Mrad were:—

| | |
|---|---|
| Modulus at 100% extension at 23°C | 13 MN/m² |
| Tensile strength at break at 23°C | 17 MN/m² |
| Elongation at break at 23°C | 150% |
| Tensile stress at 50% extension at 150°C | 0.3 MN/m² |
| Elongation at break at 150°C | 100% |
| Congo Red heat stability at 180°C | 12 hours |

A hot air gun or a lambent flame was used satisfactorily to heat the cap to bring about recovery. The expanded caps made from the first and second formulations showed no measurable shrinkage after 5 days storage at room temperature (21 ± 2°C): after 28 days the expanded diameters had decreased by about 3.5% from their original expanded values. The expanded caps made from the third formulation at 5.0 Mrad showed less than 5% shrinkage after 7 days storage at 50°C and remained capable of substantially complete recovery.

A heat-destruction test was made on one of the caps which started to shrink above 160°C and at 200°C was fully recovered. It remained tough and elastic up to 300°C when it was then showing signs of degradation and after about 5 minutes at this temperature had started to embrittle and was badly discoloured. Thus the composition was found to react in a similar manner to crosslinked polyethylene.

**0 026 973**

### Claim

A method of making a heat recoverable hollow article comprising the steps of adding a radiation crosslinking promoter to PVC a plastisol, dipping a former into the PVC plastisol to form a coating thereon and, after the plastisol constituting the coating has gelled, removing the coating from the former to form a hollow article, irradiating the hollow article to crosslink it, heating the hollow article to at least 150°C and deforming it by expanding pneumatically into a cold mould to make it heat recoverable.

### Revendication

Procédé de fabrication d'un article creux thermorétractable consistant à ajouter un promoteur de réticulation par rayonnement à un plastisol de PVC, à plonger une forme dans le plastisol de PVC pour former un revêtement sur lui, et une fois que le plastisol constituant le revêtement a été gélifié, à enlever le revêtement de la forme pour former un article creux, à irradier l'article creux pour le réticuler, à chauffer l'article creux à au moins 150°C et à le déformer en le dilatant à l'aide d'un moyen pneumatique dans un moule froid pour le rendre thermo-rétractable.

### Patentanspruch

Verfahren zur Herstellung von wärmerückstellfähigen Hohlgegenständen, dadurch gekennzeichnet, daß man ein PVC-Plastisol mit einem Strahlungsvernetzungsbeschleuniger versetzt, einen Formkern in das PVC-Plastisol eintaucht, wobei sich eine Beschichtung darauf bildet und man, nachdem das die Beschichtung ergebende Plastisol geliert ist, die Beschichtung von dem Formkern entfernt, wobei sich ein Hohlgegenstand bildet, den Hohlgegenstand bestrahlt, um ihn zu vernetzen, ihn auf mindestens 150°C erwärmt und ihn deformiert, indem man ihn in eine Kaltform pneumatisch expandiert, um ihn wärmerückstellfähig zu machen.